# EUROPEAN PATENT SPECIFICATION

(11) **EP 4 303 821 B1**
(45) Date of publication and mention of the grant of the patent: **02.09.2026**
(21) Application number: 22183640.6
(22) Date of filing: 07.07.2022
(51) Int. Cl.: G06V 10/44, G06V 10/96, G06V 20/59, G06V 40/10

(54) **SEATED PASSENGER HEIGHT ESTIMATION**
SCHÄTZUNG DER GRÖSSE EINES SITZENDEN PASSAGIERS
ESTIMATION DE LA HAUTEUR DE PASSAGER ASSIS

(43) Date of publication of application: 10.01.2024
(73) Proprietor: Aptiv Technologies AG, 8200 Schaffhausen (CH)
(72) Inventor: Friedrichs, Klaus, 44227 Dortmund (DE); Heift, Monika, 58332 Schwelm (DE)
(74) Representative: Bardehle Pagenberg Partnerschaft mbB Patentanwälte Rechtsanwälte

(56) References cited:
- US-A1- 2019 258 263
- US-A1- 2022 114 817
- CAO ZHE ET AL: "Realtime Multi-person 2D Pose Estimation Using Part Affinity Fields", 2017 IEEE CONFERENCE ON COMPUTER VISION AND PATTERN RECOGNITION (CVPR), IEEE COMPUTER SOCIETY, US, 21 July 2017 (2017-07-21), pages 1302 - 1310, XP033249469, ISSN: 1063-6919, [retrieved on 20171106], DOI: 10.1109/CVPR.2017.143
- CAO ZHE: "Realtime_Multi-Person_Pose_Estimation/testing/src/connect56LineVec.m", 14 March 2017 (2017-03-14), github.com, XP055977386, Retrieved from the Internet <URL:https://github.com/ZheC/Realtime_Multi-Person_Pose_Estimation/blob/master/testing/src/connect56LineVec.m> [retrieved on 20221102]
- COMPUTERVISIONFOUNDATION VIDEOS: "Realtime Multi-Person 2D Pose Estimation Using Part Affinity Fields", 25 July 2017 (2017-07-25), XP055977390, Retrieved from the Internet <URL:https://www.youtube.com/watch?v=OgQLDEAjAZ8&t=0s> [retrieved on 20221102]

## Description

### FIELD

The present methodologies relate to camera-based mechanisms contributing to safety and automated control in a vehicle. More specifically, they relate to height estimation of a passenger seated in a vehicle.

### BACKGROUND

Camera-based body detection mechanisms are e.g. known from US 10,643,085 B1 which relates to detecting body information on passengers of a vehicle based on humans' status recognition. Heights and weights of passengers of a vehicle are detected using face recognition and body-part lengths of the passengers. The body-part lengths of the passengers are detected from an interior image acquired from a camera. Feature information on the passengers are detected from face information of the passengers using the interior image. The heights and the weights of the passengers are detected by referring to the feature information and the body-part lengths corresponding to each of the passengers. Length information of body parts estimated by the body recognition network is mapped to the height of a person using known correlations. Relevant prior art are US 2019/258263 A1 and US 2022/114817 A1.

The present disclosure seeks to provide improvements to such existing recognition mechanisms.

### SUMMARY

The present methodologies are generally directed to improve known database record consistency mechanisms. The main aspects are set out by the independent claims.

In this respect, according to a first aspect, a computer-implemented method for estimating a height of a passenger seated at a vehicle seat of a vehicle is provided. One or more images of a portion of an interior of the vehicle are received. The one or more images show at least a part of the passenger seated on the vehicle seat and/or at least a part of the vehicle seat, but at least one of the one or more images shows at least the part of the passenger seated on the vehicle seat. Based on the one or more images, a number of body keypoints indicative of the location of defined body portions of the passenger are determined and a number of seat keypoints indicative of the location of defined points of the vehicle seat is determined. Based at least on a correlation of the determined body keypoints with the determined seat keypoints, the height of the passenger seated on the vehicle seat is estimated. The estimated height is outputted to a seat occupancy classification system of the vehicle.

In some embodiments, determining the number of seat keypoints comprises determining the number of seat keypoints based on at least one of the one or more images showing an unoccupied vehicle seat before the passenger has occupied the vehicle seat.

In some embodiments, determining the number of seat keypoints and the number of body keypoints comprises determining one or more seat keypoints covered by the passenger seated on the vehicle seat.

In some embodiments, determining the number of seat keypoints comprises determining a seat keypoint confidence value indicating a confidence of the seat keypoints determined based on the one or more current images and resetting a seat keypoint confidence threshold if a movement of the vehicle seat has been detected and maintaining the seat keypoint confidence threshold otherwise.

In some embodiments, determining the number of seat keypoints further comprises comparing the seat keypoint confidence value with the seat keypoint confidence threshold, and in response to determining that the seat keypoint confidence value is equal or above the seat keypoint confidence threshold, increasing the seat keypoint confidence threshold and replacing seat keypoints determined based on one or more previous images by the determined seat keypoints based on the one or more current images, or in response to determining that the seat keypoint confidence value is below the seat keypoint confidence threshold, discarding the determined seat keypoints based on the one or more current images and maintaining the seat keypoints determined based on one or more previous images.

In some embodiments, estimating the height of the passenger seated on the vehicle seat is further based on a position classification of the passenger seated on the vehicle seat; and/or a face identifier associated with a face specified by at least one face reference image of the passenger.

In some embodiments, the method further comprises determining a height estimation confidence value indicating a confidence of the estimated height of the passenger compared to previous estimations of the height of the passenger, comparing the confidence value with a given threshold, and outputting the estimated height to the seat occupancy classification system in response to determining that the confidence value is equal or above the threshold.

In some embodiments, estimating the height of the passenger seated on the vehicle seat is performed by use of a linear regression model.

In some embodiments, the defined points of the vehicle seat comprise at least one of bottom left of a backrest of the vehicle seat, bottom right of the backrest of the vehicle seat, top left of the backrest of the vehicle seat, top right of the backrest of the vehicle seat, top left of a headrest of the vehicle seat, and top right of the headrest of the vehicle seat.

In some embodiments, determining the number of body keypoints and the number of seat keypoints comprises transforming location indications of the body keypoints and the seat keypoints from a coordination system given by the one or more current images to a normalized coordination system.

In some embodiments, the normalized coordination system is defined by reference points in the interior of the vehicle shown on the one of more images.

In some embodiments, the reference points comprise at least one vertical normalization reference point for normalizing vertical positions of the body keypoints and the seat keypoints, and at least two horizontal normalization reference points for normalizing horizontal positions of the body keypoints and the seat keypoints and for scaling coordinates of body keypoints and seat keypoints.

In some embodiments, the at least one vertical normalization reference point is given by a top of a backrest of the vehicle seat.

In some embodiments, at least two horizontal normalization reference points are given by a location of two seat belt pillar loops of the vehicle.

According to a further aspect, a processing apparatus comprises a processor which is configured to perform the method of any one of the aforementioned method embodiments.

According to still a further aspect, a driving assistance system for a vehicle is provided which comprises the aforementioned processing apparatus that is configured to perform the method of any one of the aforementioned method embodiments.

According to still a further aspect, a vehicle is provided with a camera for taking the one or more current images and an aforementioned driving assistance system.

According to still a further aspect, a computer program product is provided which comprises instructions, e.g. stored on a computer-readable storage medium, which, when the computer program product is executed by a computer, cause the computer to carry out any one of the aforementioned method embodiments.

Further variants are set forth by the detailed description of exemplary embodiments given below.

### BRIEF DESCRIPTION OF THE FIGURES

Aspects and examples of the present disclosure are described with reference to the following figures, in which:
FIG. 1 schematically shows a vehicle safety and/or control arrangement.
FIG. 2 provides an example of seat keypoints.
FIG. 3 shows an implementation example for seat keypoint determination.
FIG. 4 depicts a passenger height determination implementation example.
FIG. 5 presents an example of height determination results.
FIG. 6 is an example of normalizing locations of seat keypoint and body keypoints.
FIG. 7 shows a diagrammatic view on a computerized platform for implementing the present methodologies.

### DETAILED DESCRIPTION

The present disclosure relates to an improvement of a camera-based seat occupancy classification system in a vehicle. Mechanisms for classifying seat occupancy in a vehicle do not only encompass determinations whether or not a seat is occupied by a passenger, but also determine more detailed parameters of a seated passenger. Specifically, estimating the height of a seated passenger is of interest for automatic vehicle controls, for example as input to an airbag control system as the airbag should not be deployed for children, and the airbag should be deployed softer for small passengers than for taller passengers. Other control and safety use cases relate to e.g. seat belt control and automated air condition controls in the vehicle.

A solution for this problem could be an end-to-end neural network which estimates for an input image the height of the passenger. However, the disadvantage of such approach is that is a potential overfitting, and hence a significant amount of training data would be required.

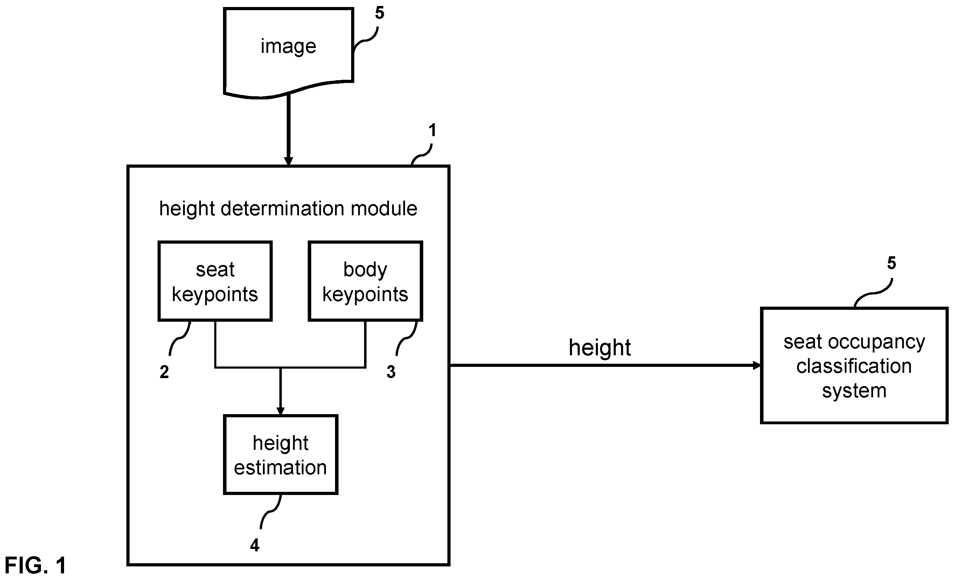

US 10,643,085 B1 proposes to map length information of body parts estimated by the body recognition network to the height of a person using some known correlations. However, the length of body parts in an image can be misleading as can be seen in FIG. 1. In this example the person on the right image is much taller than the person on the left image. However, the passenger seat is movable, and the length information also depends on the distance to the camera, leading to similar shoulder lengths in the given example. Another problem not discussed by US 10,643,085 B1 is how to normalize for different cars and camera positions.

The mechanisms presented herein encompass multiple aspects which can be employed in an alternative or in a combination manner.

Instead of using known body proportions as described by US 10,643,085 B1, keypoints are estimated e.g. by a body recognition neural network. More specifically, two types of keypoints are determined. Keypoints of the vehicle seat (seat keypoints) facilitate identification of seating positions and distance between seat and camera. The seat keypoints are given or predefined characteristic points of the seat on which the passenger to be detected is seated. Body keypoints are characteristic points of a human body which are given or predefined, such as forehead, eyes, shoulders, elbows, hips, etc. The mechanisms described herein may be implemented by a statistical learning approach which is already operable with a moderate number of training examples.

Passenger height estimation as taught herein involves a determination of the body keypoints and seat keypoints and determining a spatial relation between the body keypoints and seat keypoints. Since the distances between the defined seat keypoints can be known, the distances between the body keypoints can be determined with an improved certainty (confidence) and the height estimation is more precise than in the prior art, even in situations of unusual passenger positions on the seat or when the seat has moved and is e.g. farther away from the camera as in a seat default position.

This height estimation approach can be utilized to provide additional input to a seat occupancy classification system operable in the vehicle. The vehicle may be any type of vehicle with passenger seats such as a car, a bus, an airplane, a helicopter, a tram, a train, a boat or ship, and the like. The seat classification system may serve control and/or security purposes in the vehicle, such as airbag control, e.g. enabling/disabling one or multiple airbags for the seat concerned, adjusting airbag pressure depending on seat occupancy, or seat belt control, e.g. providing an automated warning if the seat belt is not worn, seatbelt tension control, etc.

An exemplary schematic arrangement of a height determination module 1 implementing the functionalities as described herein is given by Fig. 1. The height determination module 1 is a computerized platform which may form a part of the vehicle, e.g. in form of an embedded system, or, alternatively, may be located remotely, e.g. in form of a cloud-based system. The height determination module 1 executes a method for estimating a height of a passenger seated at a vehicle seat of a vehicle.

To this end, the height determination module 1 receives an image 5 or multiple images 5. The image has generally been taken by a sensor such as a camera mounted in the vehicle in a suitable distance and angle to show at least a portion of an interior of the vehicle, in particular least a part of the passenger seated on the vehicle seat and/or at least a part of the vehicle seat. In the event of multiple images 5 forming the basis for the height estimation, for example multiple images having been taking during the boarding/seating process of the passenger, there may be one or more images still showing the seat in an unoccupied state, and further one or more images showing the passenger seated on the vehicle seat. In order to estimate the height of the passenger seated on the vehicle seat, at least one of the one or more images shows at least the part of the passenger seated on the vehicle seat.

The height determination module 1 determines, based on the one or more images, a number of seat keypoints 2 and a number of body keypoints 3. The seat keypoints 2 are indicative of the location of defined points of the vehicle seat. The body keypoints 3 are indicative of the location of defined body portions of the passenger. The determination may utilize one or more neural networks having been trained to detect the seat keypoints 2 and the body keypoints 3.

Based on the determined seat keypoints 2 and body keypoints 3, the height determination module 1 performs height estimation 4. More specifically, the height estimation 4 is based on a spatial relation between the determined body keypoints 3 with the determined seat keypoints 2. The height estimation module 4 may utilize a statistical model such as a linear regression model. The height determination module 1 also outputs the estimated height of the passenger to the seat occupancy classification system 5 of the vehicle. Similar to the height determination module 1, the seat occupancy classification system 5 may be located onboard the vehicle or remotely, e.g. as part of a cloud-based vehicle control and safety system.

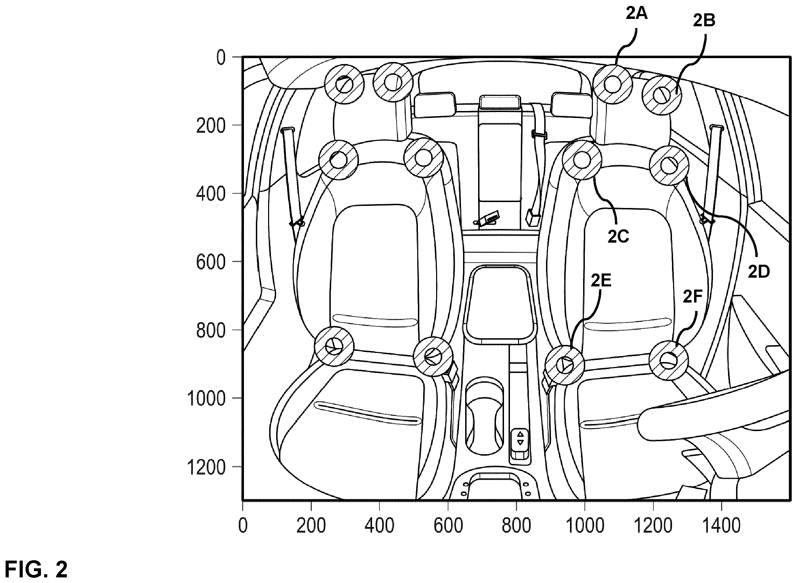

Specifically taking into account characteristic points of seats can improve the estimation of the passenger heights because the seat keypoints 2 provide additional reliability concerning seating position of the passenger and the distance between passenger and seat to the camera taking the image(s) on which the passenger height determination is based. A non-limiting example of six seat keypoints per seat is visualized in Fig. 2. The example of Fig. 2 relates to a car, but other types of vehicles are envisaged as well, as already mentioned above. Furthermore, the example of Fig. 2 relates to front seats, but the same or similar methodologies can be employed for further seats as well. In the example of Fig. 2, the defined seat keypoints are
- Seat keypoint 2A: top left of the seat headrest;
- Seat keypoint 2B: top right of the seat headrest;
- Seat keypoint 2C: top left of the seat backrest;
- Seat keypoint 2D: top right of the seat backrest;
- Seat keypoint 2E: bottom left of the seat backrest;
- Seat keypoint 2F: bottom right of the seat backrest.
A further seat keypoint example may be a left and right armrest. Note that the seat keypoints do not necessarily be defined as an integral part of seat, but may also be defined in a fixed relation to the seat, e.g. a further envisaged seat keypoint relates to the location of one or more seat belt suspension(s). Depending on the type, shape and elements of the vehicle seat, other, further or less seat keypoints 2 may be defined.

Both, seat keypoints 2 and body keypoints 3 can be learned by a neural network, hereinafter also referred to as keypoint determination neural network. The keypoint determination neural network may be a stand-alone neural network or, in some embodiments, may be part of a body recognition network which is utilized by the seat occupancy classification system 5.

In terms of time to determine the seat keypoints 2, two options exist in general. The seat keypoint determination may be executed before the passenger enters the vehicle and has been seated (i.e. the vehicle seat is in an unoccupied state) or after the person has entered the vehicle and has been seated. Seat keypoint determination in the unoccupied state may yield a higher confidence as the seat is e.g. located in a default position (e.g. horizontal backrest) and seat keypoints may not be covered by the seated passenger. On the other hand, seat keypoint determination in the seated state may provide additional information, e.g. if the passenger has adjusted the seat position or positions of the seat elements such as the backrest. Hence, seat keypoint determination in the seated state may be more robust than seat keypoint determination in the unoccupied state. In some embodiments, the height determination module 1 is arranged to perform both options, i.e. seat keypoint determination in the seated state and in the unoccupied state.

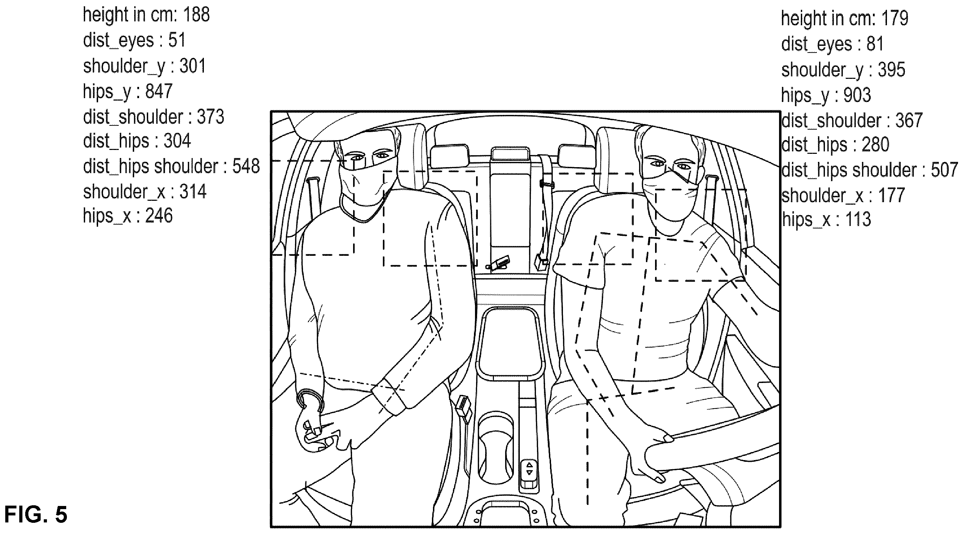

Compared to body keypoints 3, seat keypoints 2 are generally more stable (i.e. the passenger usually does not adjust the seat position many times during the ride or drive) so that temporal filtering, e.g. exponential smoothing, can be employed in order to get more reliable estimations over multiple seat keypoint determination iterations. Furthermore, if a seat keypoint is covered for a period of time, which can be recognized by correlating the determined body keypoints 3 with the determined seat keypoints 2 or can be indicated by a low confidence value of a seat keypoint, this can also be a valuable information as coverage of some seat keypoints (such as seat keypoints 2A and 2B in Fig. 2) might be covered by a tall person (cf. Fig. 5).

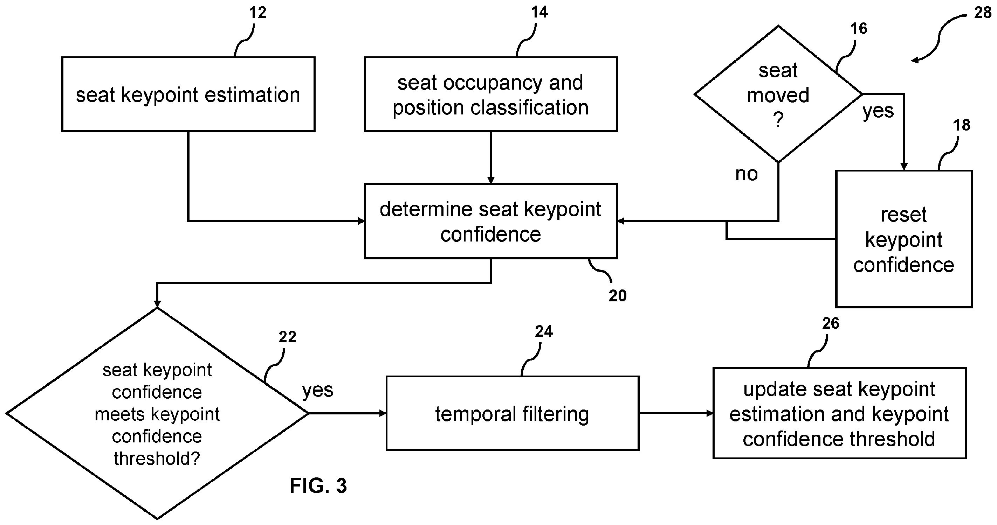

Fig. 3 schematically shows an iteration of seat keypoint determination performed by the height determination module 1 in more detail. The iteration shown by Fig. 3 is based on the outcome of a previous seat keypoint estimation 12 obtained in a previous iteration. In case of a very first iteration, the starting seat keypoint estimation values may be default values, i.e. corresponding to a default position of the seat. The procedure 28 of Fig. 3 may be triggered and performed periodically, e.g. every 10 ms, 20 ms, 50 ms, 100 ms, every second, or the like. A further or alternative trigger of the procedure 28 of Fig. 3 may be a detection of a seat movement as described in more detail further below.

Seat keypoint determination 28 includes determining, at 20, a seat keypoint confidence value per determined seat keypoint. The seat keypoint confidence value indicates a confidence of the seat keypoints determined based on the one or more current images. The seat keypoint confidence value may be determined by a neural network such as the keypoint determination neural network mentioned above. Input from a seat occupancy and position classifier indicating whether or not the vehicle seat is currently occupied and a position indictor of the passenger occupying seat, shown at 14, may also be taking into account to determine the seat keypoint confidence value. The seat keypoint confidence value may be compared to a seat keypoint confidence threshold in order to determine whether or not the seat keypoint has been determined with sufficient confidence

The procedure 28 also takes into account if the seat has been moved in the time period after the previous seat keypoint determination iteration. Depending on the type of the seat, seat movement may include a forward and/or sideways movement of the seat, a backrest movement, a headrest movement, an armrest movement, etc. Corresponding sensors installed in the vehicle monitoring the seat position or movement may detect a seat movement and may transmit a signal indicative of a seat movement to the height determination module 1. If seat movement is indicated since the last height determination iterating at 16 ("yes"), the seat keypoint confidence threshold is reset to a starting value. If, on the other hand, no movement of the vehicle seat has been detected at 16 ("no"), the seat keypoint confidence threshold with its current value is maintained for the present iteration.

The seat keypoint confidence value is compared, at 22, with the seat keypoint confidence threshold. If the seat keypoint confidence of a determined seat keypoint is equal or above the seat keypoint confidence threshold at 22 ("yes"), the seat keypoint confidence threshold is increased. For example, temporal filtering such as exponential smoothing is performed onto the seat keypoint confidence threshold at 24 to effect the increase. Generally, if the seat keypoint confidence threshold is met in multiple iterations of the height determination, the seat keypoint confidence threshold increases over time as the confidence of the determined seat keypoints becomes more and more reliable and updates of seat keypoints are less and less required. The seat keypoint confidence threshold is however reset in the event of a seat movement or adjustment which invalidates the previously gained confidence level.

Furthermore, the seat keypoints determined based on one or more previous images are replaced/updated by the determined seat keypoints based on the one or more current images at 26. The temporal filtering mechanism(s) may be applied onto a given number of past iterations including the present seat keypoint iteration. If, on the other hand, the seat keypoint confidence value is below the seat keypoint confidence threshold, the determined seat keypoints based on the one or more current images are discarded and the seat keypoints determined based on one or more previous images are maintained (not shown in Fig. 3). In some embodiments, temporal filtering and updating may also be performed when the seat keypoint confidence value does not match the seat keypoint confidence threshold. The insufficient confidence may be taken into account e.g. by way of the exponential factor (less weight if the seat keypoint confidence threshold is not met, higher weight of the seat keypoint confidence threshold is met).

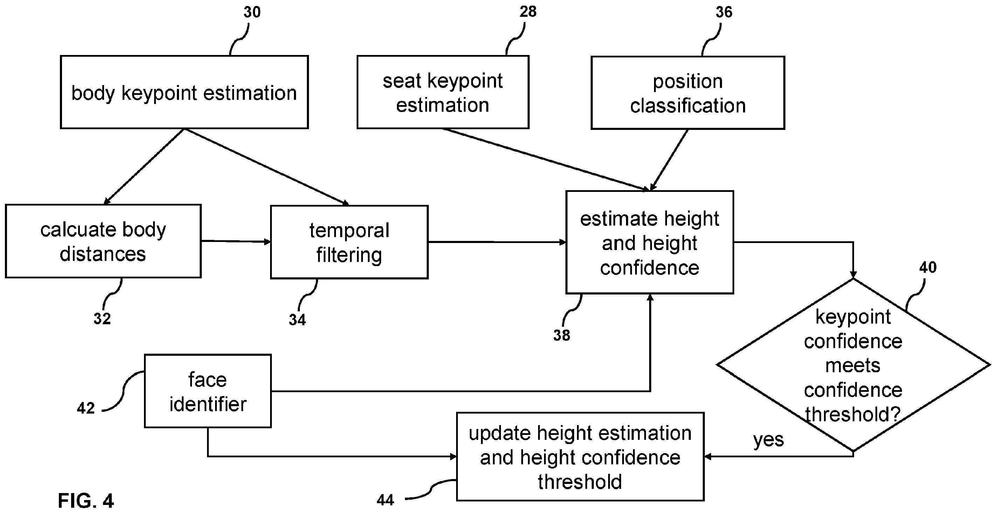

The procedure of Fig. 3 is executed for all seat keypoints defined for a given seat, either sequentially or in parallel. The location and confidence value for all seat keypoints of a vehicle seat are determined and form an output to further modules as exemplarily described next with reference to Fig. 4. The procedure of Fig. 3 is also executed for all vehicle seats of the vehicle which are subject of the passenger height determination as described herein.

A schematic example of a height determination iteration based on the seat keypoint iteration previously described with reference to Fig. 3 is given by Fig. 4. The procedure of Fig. 4 is based on the input of the seat keypoint estimation 28 of Fig. 3, i.e. the procedure of Fig. 4 may be performed after the seat keypoint determination iteration of Fig. 3.

As described above, height estimation also includes a body keypoint determination 30 of the passenger occupying the seat. Based on the one or more images, distances between specified body parts and locations of body parts of the passenger are calculated 26 and provided. Typical body parts include shoulders, nose, and elbows. Typical body distances include shoulder distance and torso length. Temporal filtering 34 over multiple previous and the current body keypoint determination iterations such as exponential smoothing is applied in order to reduce noise. Temporal filtering 34 may cover both, determined body keypoints as well calculated body distances. The result of the temporally filtered body keypoint estimation and body distances is used to estimate 38 the height of the passenger occupying the vehicle seat.

Besides the seat keypoint estimation 28, the height estimation 38 may optionally take the current position classification 36 from an existing seat occupancy and position classifier into account. Position classification 36 may be based on the same one or more images as the seat keypoint estimation 28 and the body keypoint estimation 30. The position estimation 36 can provide additional information for the height determination 38 as the position classification 36 enables to differentiate between different current poses of the person occupying the vehicle seat. For example, the position classification 36 may determine that the person is currently leaning forward which may cause one or more seat keypoints to become temporarily visible (i.e. not covered by the body of the person). Hence, recognizing such particular leaning forward pose may re-trigger the seat keypoint determination 28 of Fig. 3. Furthermore, position classification 36 may indicate a normal position of the person, e.g. an upright position. Such position may provide a relatively confident height determination 38, so that recognition of such upright position may re-trigger both, body keypoint determination 30 and, subsequently, height determination 38. An unclear result of the position determination 36 may e.g. reduce the confidence height estimation confidence value. The position determination 36 may be performed using a neural network based on the one or more images.

An additional optional input to the height estimation 38 is a face identifier 42. Based on the one or more images, an existing image processing system may have performed an image recognition process and may have identified the person occupying the vehicle seat. Such identification may be performed based on one or more reference image depicting persons which are known to use the vehicle. For example, a limited number of persons such as member of a family or members of a company may regularly use the vehicle. Utilizing face identifiers could also be feasible in public transport where images of the passenger are available, e.g. in air travel.

Images of these persons may be stored in a reference image storage and may be associated with a respective face identifier of the respective person. Image processing to identify a face identifier of the person occupying the vehicle seat may also include temporal filtering over current images of multiple seats of the vehicle in order to increase confidence of the face recognition. Body characteristics such as body distances of these persons may also be stored in association with the face identifier, so that an additional input of the face identifier may increase the confidence of the estimated height. The face identifier may be determined with the help of a neural network.

Similar to the determination of the seat keypoints explained above with reference to Fig. 3, height determination 38 may include determining a height estimation confidence value indicating a confidence of the estimated height of the passenger compared to previous estimations of the height of the passenger.

As mentioned above, the height estimation 38 determining an estimated height and height confidence is performed by using a statistical model. **In** some embodiments, the statistical model is a linear regression model which inputs the determined seat keypoints and body keypoints. Optionally, the statistical model also inputs length indications of body parts provided by a (given) body classifier and the previously determined seat keypoint confidence values of the seat keypoints and body keypoint confidence values of the body keypoints. The statistical model is trained in a training phase before operating in or for the vehicle as part of the height determination module 1. Training data to train the statistical model may include a number of cabin images of the particular vehicle with different passengers and corresponding real height values. In order to achieve profound training of the statistical model, the training data should be as diverse as possible including passengers with various sizes and various seating positions, e.g. leaning forward, leaning to the side, adjusting the backrest, and so on. By applying horizontal mirroring, the same statistical model can be learned and applied for multiple different seats of the vehicle, e.g. both, the driver seat and the passenger front seat in the car.

After having determined the estimated height and height confidence value, the height confidence value is compared 40 with a given threshold. If the height confidence of the passenger is equal or above the seat keypoint confidence threshold at 40 ("yes"), the previously determined height (if available) is replaced/updated by the determined height at 44. For example, in refined embodiments, the update of the height is implemented by way of temporal filtering, e.g. in a weighted manner wherein the weight is given by the height confidence value. The height confidence threshold may be updated (increased) as well, as the height estimation generally converges with every further height estimation iteration. If, on the hand, the height confidence value is below the height confidence threshold, the determined height based on the one or more current images is discarded and the height determined based on one or more previous images are maintained (not shown in Fig. 4). In embodiments, the height confidence threshold is reset in response to determining that a new person has occupied the seat and/or at the start of a ride (e.g. after power-on of the vehicle).

In response to determining that the height confidence value is equal or above the height confidence threshold and the estimated height is updated, the estimated (updated) height is then outputted to a control and/or safety system of the vehicle, or a further intermediate module providing input to the control and/or safety system of the vehicle such as the aforementioned seat occupancy classification system.

A non-limiting example visualizing estimated heights, body distances and positions of particular body parts determined on the basis of the mechanisms described herein is shown by Fig. 5.

In embodiments, both, seat keypoints and body keypoints are specified by x and y values in a defined coordinate system. In addition, for each seat keypoint and/or body keypoint, an additional variable such as a flag is defined which indicates whether the keypoint has been detected (e.g. =1) or not (e.g. =0). In case of a determined invisibility, a keypoint coordinate value pair (x and y) is set to a given constant value, e.g. -1.

In some embodiments, the coordinate system is given by the image or image crop showing the vehicle seat and/or the passenger seated on the vehicle seat. An image showing the interior of the vehicle with the seat and passenger may have a size of 1600x1300 pixels. For example, the coordinate system origin (x=0, y=0) is defined to be the lower left image corner, i.e. xₘₐₓ=1600 and yₘₐₓ=1300 in the given image size example.

However, this approach of an image-based coordinate system may lead to varying coordinate values of the seat and body keypoints between multiple image in case of changing camera perspectives, angles, zoom, image crops, different types/models of vehicles etc., thereby hampering comparability between images of multiple height determinations.

To address this, a normalization method is presented which enables the transfer into a different car and to a different camera perspective. Accordingly, in some embodiments, determining the number of body keypoints and the number of seat keypoints comprises transforming location indications of the body keypoints and the seat keypoints from an aforementioned coordination system given by the one or more current images to a normalized coordination system.

To facilitate normalization, the camera is mounted at a fixed given location, preferably centrally in front of the seat(s) and passenger(s) to be analyzed. In the example of the vehicle being a car, the camera can be located centrally close to the windshield so that passenger and driver seat appear nearly symmetrically. A similar camera location can be utilized for any other vehicle and seat type.

Normalization provides similar absolute values for the body keypoints for different cars and (slightly) different camera perspectives. Therefore, in some embodiments, the normalized coordination system is defined by reference points in the interior of the vehicle shown on the one of more images. The reference points are identified either by a manual definition or automatically, e.g. by a neural network. A number of reference points may be defined for normalizing the vertical and horizontal values of the seat keypoint location, e.g. one (or more) reference point(s) for normalizing the vertical position of the keypoints, and two (or more) reference points for normalizing the horizontal position and for scaling the keypoint coordinates up or down in order to get a scale which is independent of camera distance and angle.

A side effect of the normalization functionality is that also raw body keypoint information can be used instead of utilizing pre-known length information of body parts. Normalization also interrelates with the utilization of seat keypoints discussed above to estimate body closeness to the camera, and additionally allow a direct comparison of the body part positions to the seat height. However, it is noted that the normalization functionality discussed herein may also be employed independently from the seat keypoint concept, in particular for determining body keypoints and comparing locations of body keypoints over multiple height determination iterations.

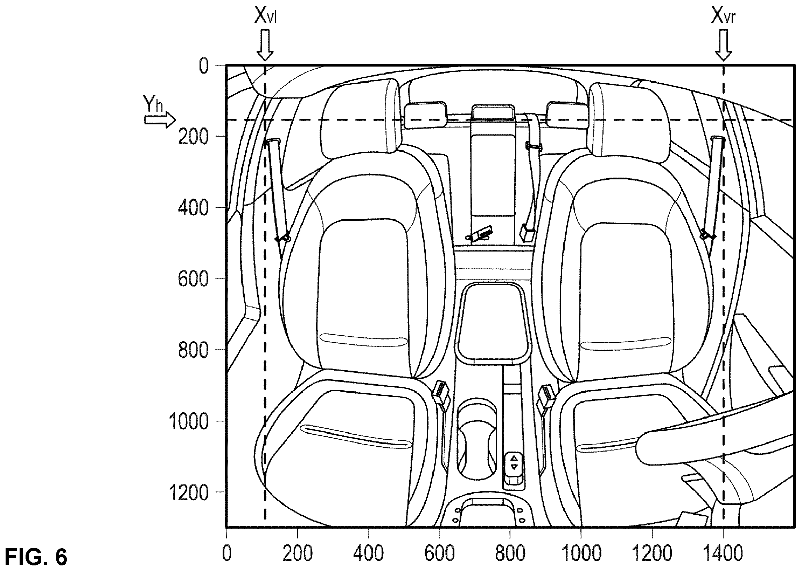

A normalization coordinate system example relating to an exemplary car is given by Fig. 6 according to which the top of the backseat's backrest and the pillar loops of the seat belts as reference points. The vertical lines are defined by the x-coordinate of the pillar loops (xᵥₗ and xᵥᵣ) and the horizontal line is defined by the top of the backrest (yₕ). These defined three lines are used to transform the keypoint locations in the above-mentioned original coordinate system (coordinate origin being located in one of the image corners such as the bottom left image corner) into a normalized keypoint representation. In this normalized keypoint representation, the horizontal line represents yₕ^{new} = 0, the left vertical line represents x_{vlnew} = 0 and the right vertical line represents xᵥₗ^{new} = 1000. In both directions, horizontally and vertically, the coordinate system may be scaled by a factor (xᵥᵣ-xᵥₗ)/1000.

Accordingly, the locations of a keypoint (x, y) in the non-normalized coordinate can be transformed into the normalized representation (x^{new}, y^{new}) by the following formulas ${x}^{new} = \frac{1000 \left(x-{x}_{vl}\right)}{{x}_{vr} - {x}_{vl}}$ ${y}^{new} = \frac{1000 \left(y-{y}_{h}\right)}{{x}_{vr} - {x}_{vl}}$

To summarize the example of Fig. 6, in some embodiments, the reference points comprise at least one vertical normalization reference point for normalizing vertical positions of the body keypoints and the seat keypoints and at least two horizontal normalization reference points for normalizing horizontal positions of the body keypoints and the seat keypoints and for scaling coordinates of body keypoints and seat keypoints. The at least one vertical normalization reference point is given by a top of a backrest of the vehicle seat. The at least two horizontal normalization reference points are given by a location of two seat belt pillar loops of the vehicle. Similar normalized coordinate system definitions can be specified for any other vehicle type and seat type. With such definition the coordinate system is independent from the camera distance and only slightly dependent from the height of the camera position.

As mentioned above, aspects of the present disclosure include a method for passenger height determination, a corresponding processing apparatus comprising a processor configured to perform the height determination method, a driving assistance system for a vehicle comprising the processing apparatus, a vehicle with a camera for taking the one or more current images and the aforementioned driving assistance system, a computer program to carry out the aforementioned height determination method, a computer program product comprising instructions which, when the computer program product is executed by a computer, cause the computer to carry out the aforementioned height determination method, a computer-readable data carrier having stored thereon the aforementioned computer program product.

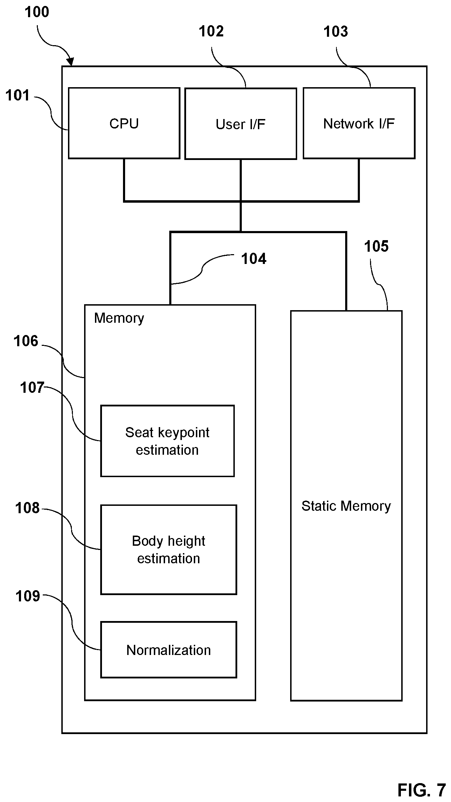

Fig. 7 is a diagrammatic representation of the internal component of a computing machine 100 implementing the functionality of the height determination module 1. Similar computing machines may also realize one or more of the input systems to the height determination module 1 such as the position classifier or face identifier determination described above. The computing machine 100 includes a set of instructions to cause the computing machine 100 to perform any of the methodologies discussed herein when executed by the computing machine 100. The computing machine 100 includes at least one processor 101, a main memory 106 and a network interface device 103 which communicate with each other via a bus 104. Optionally, the computing machine 100 may further include a static memory 105 and a disk-drive unit. A video display, an alpha-numeric input device and a cursor control device may be provided as examples of user interface 102. The network interface device 103 connects the computing machine 100 implementing the height estimation module 1 to the other components of the system such as the seat occupancy classification system 5 and/or the camera or subsystem providing the one or more images, or any further components.

Computing machine 100 includes a memory 106 such as main memory, random access memory (RAM) and/or any further volatile memory. The memory 106 may store temporary data and program data to facilitate the functionality of the height determination module 1. For example, the computing machine 100 implementing the height determination module 1 may maintain a cache 107 storing various data such as previous and updated height determination values, default and updated seat keypoint values, previous and updated confidence values, body keypoint values. The memory 106 may also store computer program data 108 to implement the functionalities described herein, such as keypoint determination, height determination, input and output functions, and so on.

A set of computer-executable instructions (computer program code 108) embodying any one, or all, of the functionalities described herein, resides completely, or at least partially, in or on a machine-readable storage medium, e.g., the memory 106. For example, the instructions 108 may include software processes implementing the passenger height determination functionality of the height determination module 1.

The instructions 108 may further be transmitted or received as a propagated signal via the Internet through the network interface device 103 or via the user interface 102. Communication within computing machine is performed via a bus 104. Basic operation of the computing machine 100 is controlled by an operating system which is also located in the memory 106, the at least one processor 101 and/or the static memory 105.

In general, the routines executed to implement the embodiments, whether implemented as part of an operating system or a specific application, component, program, object, module or sequence of instructions, or even a subset thereof, may be referred to herein as "computer program code" or simply "program code". Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the scope of the claims.

## Claims

1. A computer-implemented method for estimating a height of a passenger seated at a vehicle seat of a vehicle, the method comprising:
- receiving one or more images of a portion of an interior of the vehicle showing at least a part of the passenger seated on the vehicle seat and/or at least a part of the vehicle seat, at least one of the one or more images showing at least the part of the passenger seated on the vehicle seat;
- determining, based on the one or more images,
∘ a number of body keypoints indicative of the location of defined body portions of the passenger; and
∘ a number of seat keypoints indicative of the location of defined points of the vehicle seat;
- estimating, based at least on a correlation of the determined body keypoints with the determined seat keypoints, the height of the passenger seated on the vehicle seat;
- outputting the estimated height to a seat occupancy classification system of the vehicle; the method further comprising:
- determining a height estimation confidence value indicating a confidence of the estimated height of the passenger compared to previous estimations of the height of the passenger using a statistical model;
- comparing the confidence value with a given threshold;
- outputting the estimated height to the seat occupancy classification system in response to determining that the confidence value is equal or above the threshold; and
- increasing the threshold in response to the determining that the confidence value is equal or above the threshold.

2. The method of claim 1, wherein determining the number of seat keypoints comprises determining the number of seat keypoints based on at least one of the one or more images showing an unoccupied vehicle seat before the passenger has occupied the vehicle seat.

3. The method of claim 1 or claim 2, wherein determining the number of seat keypoints and the number of body keypoints comprises determining one or more seat keypoints covered by the passenger seated on the vehicle seat.

4. The method of any one of claims 1 to claim 3, wherein determining the number of seat keypoints comprises:
- determining a seat keypoint confidence value indicating a confidence of the seat keypoints determined based on the one or more current images; and
- resetting a seat keypoint confidence threshold if a movement of the vehicle seat has been detected and maintaining the seat keypoint confidence threshold otherwise;
wherein determining the number of seat keypoints further comprises:
- comparing the seat keypoint confidence value with the seat keypoint confidence threshold; and
- in response to determining that the seat keypoint confidence value is equal or above the seat keypoint confidence threshold, increasing the seat keypoint confidence threshold and replacing seat keypoints determined based on one or more previous images by the determined seat keypoints based on the one or more current images; or
- in response to determining that the seat keypoint confidence value is below the seat keypoint confidence threshold, discarding the determined seat keypoints based on the one or more current images and maintaining the seat keypoints determined based on one or more previous images.

5. The method of any one of claims 1 to 4, wherein estimating the height of the passenger seated on the vehicle seat is further based on
∘ a current position classification of the passenger seated on the vehicle seat; and/or
∘ a face identifier associated with a face specified by at least one face reference image of the passenger.

6. The method of any one of claims 1 to 5, wherein the defined points of the vehicle seat comprise at least one of
- bottom left of a backrest of the vehicle seat,
- bottom right of the backrest of the vehicle seat,
- top left of the backrest of the vehicle seat,
- top right of the backrest of the vehicle seat,
- top left of a headrest of the vehicle seat, and
- top right of the headrest of the vehicle seat.

7. The method of any one of claims 1 to 6, wherein determining the number of body keypoints and the number of seat keypoints comprises transforming location indications of the body keypoints and the seat keypoints from a coordination system given by the one or more current images to a normalized coordination system.

8. The method of claim 7, wherein the normalized coordination system is defined by reference points in the interior of the vehicle shown on the one of more images.

9. The method of claim 8, wherein the reference points comprise
- at least one vertical normalization reference point for normalizing vertical positions of the body keypoints and the seat keypoints, and
- at least two horizontal normalization reference points for normalizing horizontal positions of the body keypoints and the seat keypoints and for scaling coordinates of body keypoints and seat keypoints.

10. The method of claim 9, wherein the at least one vertical normalization reference point is given by a top of a backrest of the vehicle seat and/or at least two horizontal normalization reference points are given by a location of two seat belt pillar loops of the vehicle.

11. A driving assistance system for a vehicle comprising a processing apparatus configured to perform the method of any one of claims 1 to 10.

12. A vehicle comprising:
- a camera for taking the one or more current images; and
- a driving assistance system of claim 11.

13. A computer program product comprising instructions which, when the computer program product is executed by a computer, cause the computer to carry out the method of any one of claims 1 to 10.

## Patentansprüche

1. Ein computerimplementiertes Verfahren zum Schätzen einer Höhe eines Fahrgasts, der auf einem Fahrzeugsitz eines Fahrzeugs sitzt, wobei das Verfahren Folgendes umfasst:
- Empfangen eines oder mehrerer Bilder eines Abschnitts eines Innenraums des Fahrzeugs, die mindestens einen Teil des auf dem Fahrzeugsitz sitzenden Fahrgasts und/oder mindestens einen Teil des Fahrzeugsitzes zeigen, wobei mindestens eines des einen oder der mehreren Bilder mindestens den Teil des auf dem Fahrzeugsitz sitzenden Fahrgasts zeigt;
- Bestimmen, basierend auf dem einen oder den mehreren Bildern,
∘ einer Anzahl von Körperschlüsselpunkten, die die Position von definierten Körperabschnitten des Fahrgasts angeben; und
∘ einer Anzahl von Sitzschlüsselpunkten, die die Position von definierten Punkten des Fahrzeugsitzes angeben;
- Schätzen, basierend mindestens auf einer Korrelation der bestimmten Körperschlüsselpunkte mit den bestimmten Sitzschlüsselpunkten, der Höhe des auf dem Fahrzeugsitz sitzenden Fahrgasts;
- Ausgeben der geschätzten Höhe an ein Sitzbelegungsklassifizierungssystem des Fahrzeugs; wobei das Verfahren ferner Folgendes umfasst:
- Bestimmen eines Höhenschätzungskonfidenzwerts, der eine Konfidenz der geschätzten Höhe des Fahrgasts im Vergleich zu vorherigen Schätzungen der Höhe des Fahrgasts unter Verwendung eines statistischen Modells angibt;
- Vergleichen des Konfidenzwerts mit einem gegebenen Schwellenwert;
- Ausgeben der geschätzten Höhe an das Sitzbelegungsklassifizierungssystem als Reaktion auf das Bestimmen, dass der Konfidenzwert gleich oder über dem Schwellenwert ist; und
- Erhöhen des Schwellenwerts als Reaktion auf das Bestimmen, dass der Konfidenzwert gleich oder über dem Schwellenwert ist.

2. Das Verfahren nach Anspruch 1, wobei Bestimmen der Anzahl von Sitzschlüsselpunkten Bestimmen der Anzahl von Sitzschlüsselpunkten basierend auf mindestens einem des einen oder der mehreren Bilder umfasst, die einen nicht belegten Fahrzeugsitz zeigen, bevor der Fahrgast den Fahrzeugsitz belegt hat.

3. Das Verfahren nach Anspruch 1 oder Anspruch 2, wobei Bestimmen der Anzahl von Sitzschlüsselpunkten und der Anzahl von Körperschlüsselpunkten Bestimmen eines oder mehrerer Sitzschlüsselpunkte umfasst, die von dem auf dem Fahrzeugsitz sitzenden Fahrgast abgedeckt werden.

4. Das Verfahren nach einem der Ansprüche 1 bis 3, wobei Bestimmen der Anzahl von Sitzschlüsselpunkten Folgendes umfasst:
- Bestimmen eines Sitzschlüsselpunktkonfidenzwerts, der eine Konfidenz der basierend auf dem einen oder den mehreren aktuellen Bildern bestimmten Sitzschlüsselpunkte angibt; und
- Zurücksetzen eines Sitzschlüsselpunktkonfidenzschwellenwerts, wenn eine Bewegung des Fahrzeugsitzes erfasst wurde, und andernfalls Beibehalten des Sitzschlüsselpunktkonfidenzschwellenwerts;
wobei Bestimmen der Anzahl von Sitzschlüsselpunkten ferner Folgendes umfasst:
- Vergleichen des Sitzschlüsselpunktkonfidenzwerts mit dem Sitzschlüsselpunktkonfidenzschwellenwert; und
- als Reaktion auf Bestimmen, dass der Sitzschlüsselpunktkonfidenzwert gleich oder über dem Sitzschlüsselpunktkonfidenzschwellenwert ist, Erhöhen des Sitzschlüsselpunktkonfidenzschwellenwerts und Ersetzen von basierend auf einem oder mehreren vorherigen Bildern bestimmten Sitzschlüsselpunkten durch die basierend auf dem einen oder den mehreren aktuellen Bildern bestimmten Sitzschlüsselpunkte; oder
- als Reaktion auf Bestimmen, dass der Sitzschlüsselpunktkonfidenzwert unter dem Sitzschlüsselpunktkonfidenzschwellenwert ist, Verwerfen der basierend auf dem einen oder den mehreren aktuellen Bildern bestimmten Sitzschlüsselpunkte und Beibehalten der basierend auf einem oder mehreren vorherigen Bildern bestimmten Sitzschlüsselpunkte.

5. Das Verfahren nach einem der Ansprüche 1 bis 4, wobei Schätzen der Höhe des auf dem Fahrzeugsitz sitzenden Fahrgasts ferner auf Folgendem basiert:
∘ einer aktuellen Positionsklassifizierung des auf dem Fahrzeugsitz sitzenden Fahrgasts; und/oder
∘ einer Gesichtskennung, die mit einem durch mindestens ein Gesichtsreferenzbild des Fahrgasts spezifizierten Gesicht assoziiert ist.

6. Das Verfahren nach einem der Ansprüche 1 bis 5, wobei die definierten Punkte des Fahrzeugsitzes mindestens eines umfassen von
- unten links von einer Rückenlehne des Fahrzeugsitzes,
- unten rechts von der Rückenlehne des Fahrzeugsitzes,
- oben links von der Rückenlehne des Fahrzeugsitzes,
- oben rechts von der Rückenlehne des Fahrzeugsitzes,
- oben links von einer Kopfstütze des Fahrzeugsitzes, und
- oben rechts von der Kopfstütze des Fahrzeugsitzes.

7. Das Verfahren nach einem der Ansprüche 1 bis 6, wobei Bestimmen der Anzahl von Körperschlüsselpunkten und der Anzahl von Sitzschlüsselpunkten Umwandeln von Positionsangaben der Körperschlüsselpunkte und der Sitzschlüsselpunkte von einem durch das eine oder die mehreren aktuellen Bilder gegebenen Koordinationssystem in ein normalisiertes Koordinationssystem umfasst.

8. Das Verfahren nach Anspruch 7, wobei das normalisierte Koordinationssystem durch Referenzpunkte im Innenraum des Fahrzeugs definiert ist, die auf dem einen oder den mehreren Bildern gezeigt sind.

9. Das Verfahren nach Anspruch 8, wobei die Referenzpunkte Folgendes umfassen
- mindestens einen vertikalen Normalisierungsreferenzpunkt zum Normalisieren vertikaler Positionen der Körperschlüsselpunkte und der Sitzschlüsselpunkte, und
- mindestens zwei horizontale Normalisierungsreferenzpunkte zum Normalisieren horizontaler Positionen der Körperschlüsselpunkte und der Sitzschlüsselpunkte und zum Skalieren von Koordinaten von Körperschlüsselpunkten und Sitzschlüsselpunkten.

10. Das Verfahren nach Anspruch 9, wobei der mindestens eine vertikale Normalisierungsreferenzpunkt durch eine Oberseite einer Rückenlehne des Fahrzeugsitzes gegeben ist und/oder mindestens zwei horizontale Normalisierungsreferenzpunkte durch eine Position von zwei Sicherheitsgurtsäulenschlaufen des Fahrzeugs gegeben sind.

11. Ein Fahrassistenzsystem für ein Fahrzeug, umfassend eine Verarbeitungsvorrichtung, die konfiguriert ist, um das Verfahren nach einem der Ansprüche 1 bis 10 durchzuführen.

12. Ein Fahrzeug, umfassend:
- eine Kamera zum Aufnehmen des einen oder der mehreren aktuellen Bilder; und
- ein Fahrassistenzsystem nach Anspruch 11.

13. Ein Computerprogrammprodukt, umfassend Anweisungen, die, wenn das Computerprogrammprodukt von einem Computer ausgeführt wird, den Computer veranlassen, das Verfahren nach einem der Ansprüche 1 bis 10 auszuführen.

## Revendications

1. Un procédé implémenté par calculateur pour estimer une taille d'un passager assis sur un siège d'un véhicule, le procédé comprenant :
- la réception d'une ou plusieurs images d'une partie d'un intérieur du véhicule, montrant au moins une partie du passager assis sur le siège de véhicule et/ou au moins une partie du siège de véhicule, au moins l'une des une ou plusieurs images montrant au moins la partie du passager assis sur le siège de véhicule ;
- la détermination, sur la base des une ou plusieurs images,
∘ d'un nombre de points critiques de corps représentatifs de l'emplacement de parties de corps définies du passager ; et
∘ un nombre de points critiques de siège représentatifs de l'emplacement de points définis du siège de véhicule ;
- l'estimation, au moins sur la base d'une corrélation des points critiques de corps déterminés avec les points critiques de siège déterminé, de la taille du passager assis sur le siège de véhicule ;
- la délivrance de la taille estimée à un système de classification d'occupation de siège de véhicule ; le procédé comprenant en outre :
- la détermination d'une valeur de confiance d'estimation de taille indiquant une confiance de la taille estimée du passager par rapport à des estimations antérieures de la taille du passager à l'aide d'un modèle statistique ;
- la comparaison de la valeur de confiance à un seuil donné ;
- la délivrance de la taille estimée au système de classification d'occupation de siège en réponse à la détermination que la valeur de confiance est égale ou supérieure au seuil ; et
- l'augmentation du seuil en réponse à la détermination que la valeur de confiance est égale ou supérieure au seuil.

2. Le procédé de la revendication 1, dans lequel la détermination du nombre de points critiques de siège comprend la détermination du nombre de points critiques de siège sur la base d'au moins l'une des une ou plusieurs images qui montrent un siège de véhicule non occupé avant que le passager n'ait occupe le siège de véhicule.

3. Le procédé de la revendication 1 ou de la revendication 2, dans lequel la détermination du nombre de points critiques de siège et du nombre de points critiques de corps comprend la détermination d'un ou plusieurs points critiques de siège couverts par le passager assis sur le siège de véhicule.

4. Le procédé de l'une des revendications 1 à 3, dans lequel la détermination du nombre de points critiques de siège comprend :
- la détermination d'une valeur de confiance de point critique de siège indiquant une confiance des points critiques de siège déterminée sur la base des une ou plusieurs images courantes ; et
- la réinitialisation d'un seuil de confiance de point critique de siège si un déplacement du siège de véhicule a été détecté, et dans le cas contraire le maintien du seuil de confiance du point critique de siège ;
dans lequel la détermination du nombre de points critiques de siège comprend en outre :
- la comparaison de la valeur de confiance du point critique de siège à un seuil de confiance de point critique de siège ; et
- en réponse à la détermination que la valeur de confiance de point critique de siège est égale ou supérieure au seuil de confiance de point critique de siège, l'augmentation du seuil de confiance de point critique de siège et le remplacement des points critiques de siège déterminés sur la base d'une ou plusieurs images antérieures par les points critiques de siège déterminés sur la base des une ou plusieurs images courantes ; ou
- en réponse à la détermination que la valeur de confiance de point critique de siège est au-dessous du seuil de confiance de point critique de siège, l'élimination des points critiques de siège déterminés sur la base des une ou plusieurs images courantes et le maintien des points critiques de siège déterminées sur la base des une ou plusieurs images antérieures.

5. Le procédé de l'une des revendications 1 à 4, dans lequel l'estimation de la taille du passager assis sur le siège de véhicule est en outre basée sur :
∘ une classification de position courante du passager assis sur le siège de véhicule ; et/ou
∘ un identifiant de visage associé à un visage spécifié par au moins une image de référence de visage du passager.

6. Le procédé de l'une des revendications 1 à 5, dans lequel les points critiques définis du siège de véhicule comprennent au moins l'un d'entre :
- le bas à gauche d'un dossier du siège de véhicule,
- le bas à droite du dossier du siège de véhicule,
- le haut à gauche du dossier du siège de véhicule,
- le haut à droite du dossier du siège de véhicule,
- le haut à gauche d'un appui-tête du siège de véhicule, et
- le haut à droite de l'appui-tête du siège de véhicule.

7. Le procédé de l'une des revendications 1 à 6, dans lequel la détermination du nombre de points critiques de corps et du nombre de points critiques de siège comprend la transformation d'indications d'emplacement des points critiques de corps et des points critiques de siège, d'un système de coordonnées donné par les une ou plusieurs images courantes vers un système de coordonnées normalisé.

8. Le procédé de la revendication 7, dans lequel le système de coordonnées normalisé est défini par des points critiques de référence à l'intérieur du véhicule qui sont montrés sur les une ou plusieurs images.

9. Le procédé de la revendication 8, dans lequel les points critiques de référence comprennent :
- au moins un point de référence de normalisation verticale pour la normalisation des positions verticales des points critiques de corps et des points critiques de siège, et
- au moins deux points critiques de référence de normalisation horizontale pour la normalisation des positions horizontales des points critiques de corps et des points critiques de siège et pour la mise à l'échelle des coordonnées des points critiques de corps et des points critiques de siège.

10. Le procédé de la revendication 9, dans lequel l'au moins un point de référence de normalisation verticale est donné par un haut d'un dossier du siège de véhicule, et/ou au moins deux points de référence de normalisation horizontale sont donnés par un emplacement de deux enrouleurs de montant pour ceinture de sécurité du véhicule.

11. Un système d'assistance à la conduite pour un véhicule, comprenant un appareil de traitement configuré pour mettre en œuvre le procédé de l'une des revendications 1 à 10.

12. Un véhicule comprenant :
- une caméra pour prendre les une ou plusieurs images courantes ; et
- un système d'assistance à la conduite de la revendication 11.

13. Un produit de programme de calculateur comprenant des instructions qui, lorsque le produit de programme de calculateur est exécuté par un calculateur, font en sorte que le calculateur mette en œuvre le procédé de l'une des revendications 1 à 10.
